# EUROPÄISCHE PATENTANMELDUNG

(11) **EP 1 227 335 A2**
(43) Veröffentlichungstag der Anmeldung: **31.07.2002**
(21) Anmeldenummer: 01124075.1
(22) Anmeldetag: 10.10.2001
(51) Int. Cl.: G01S 7/02, H01L 41/00, H02K 44/00, G01S 13/90

(54) **Stromversorgungssystem für ROSAR-Transponder einschliesslich Sende- und Empfangsantennen für ROSAR-Einrichtungen**

(30) Priorität: 18.01.2001 DE 10101989
(71) Anmelder: EADS Deutschland GmbH, 81663 München (DE)
(72) Erfinder: Klausing, Helmut, Dr., 82234 Hochstadt (DE); Kaltschmidt, Horst, Dr., 85579 Neubiberg (DE)
(74) Vertreter: Meel, Thomas

(57) **Zusammenfassung**

Die Erfindung bezieht sich auf eine ROSAR-Stromversorgung für Sende- und Empfangsantennen, die in der Spitze eines Hubschrauber-Rotorblattes integriert sind und es werden Vorschläge für die Konzipierung einer solchen Stromversorgung gebracht, die zu einer Realisierung der Umwandlung von aerodynamischer Energie in elektrische Energie führen. Ausführungsbeispiele sind erläutert und die Figuren der Zeichnung ergänzen diese Erläuterungen.

## Beschreibung

Die Erfindung bezieht sich auf ein Stromversorgungssystem für ROSAR-Transponder einschließlich Sende- und Empfangsantennen für ROSAR-Einrichtungen, die in der Spitze eines Hubschrauberrotorblattes integriert sind gemäß den Merkmalen des Oberbegriffs von Anspruch 1.

Aus der DE 39 22 086 und der DE 43 23 511 ist eine ROSAR-Einrichtung bekannt, die in Echtzeitnähe im Online-Betrieb einsetzbar ist und neben der Kartographie, der Hinderniswarnung, der Minendetektion und der Landehilfe auch der Zielaufklärung, der Zielverfolgung und der Flugkörpereinweisung dient. Die ROSAR-Einrichtung wird pulsfrequent oder im FM-CW-Betrieb eingesetzt und arbeitet im cm- bzw. mm-Wellenlängenbereich. Auf diesem Stand der Technik baut die vorliegende Erfindung auf.

Gemäß der DE 39 22 086 ist in der Spitze eines Hubschrauber-Rotorblattes eine Sende- und Empfangsantenne für Radarsignale integriert. Während die drahtlose Kommunikationsverbindung zum Rumpf des Hubschraubers zum Stand der Technik zählt, ist die Möglichkeit und Vorteilhaftigkeit einer drahtlose Stromversorgung für die in der Nähe einer Blattspitze geklebte ROSAR-Sende- und Empfangseinrichtung bisher nicht erkannt worden.

Nach dem bisherigen Stand der Technik muss eine in der Nähe der Blattspitze eines Hubschrauber-Rotorblattes angebrachte Transponder-Elektronikkarte durch Drahtleitungen oder Batterie versorgt werden. Im Falle einer Drahtleiterversorgung müsste die Versorgungsenergie für die Elektronikkarte über eine Drehkupplung, welche die Energie vom Hubschrauberrumpf in den Rotorkopf weiterleitet, und über einen längs des Rotorblattes eingelegten oder aufgeklebten Zweidraht in die zu versorgende Elektronikkarte geleitet werden.

Eine Batteriestromversorgung würde neben den Gewichtsproblemen vor allem einen ständigen Wartungsaufwand nach sich ziehen.

Der Erfindung liegt die Aufgabe zugrunde, die Stromversorgung für einen ROSAR-Transponder, der in der Spitze eines Hubschrauber-Rotorblattes integriert ist, auf der Basis einer Umwandlung von aerodynamischer Energie in elektrische Energie zu ermöglichen und so den Wartungsaufwand ganz wesentlich zu minimieren, keine Gewichts- und Unwuchtprobleme zu schaffen und eine leichte Integrierbarkeit der Stromversorgung in eine flache, windschlüpfrige Elektronik(Transponder-)-Karte zu ermöglichen.

Diese Aufgabe wird durch die im Anspruch 1 aufgezeigten Maßnahmen in überraschender Weise gelöst. In den Unteransprüchen sind Ausgestaltungen und Weiterbildungen angegeben und in der nachfolgenden Beschreibung werden Ausführungsbeispiele erläutert. Diese Erläuterungen werden durch die Figuren der Zeichnung ergänzt. Es zeigen:
- Fig. 1: eine Schemaskizze für ein Rotorblatt mit aufgeklebter Stromversorgungskarte,
- Fig. 2: eine Schemaskizze für ein Ausführungsbeispiel einer aerodynamischelektromagnetischen Ausgestaltung und
- Fig. 3: einen Querschnitt eines Ausführungsbeispiels für einen aeromagnetohydrodynamischen Generator.

Der allgemeine Erfindungsgedanke sieht vor, dass eine drahtlose ROSAR-Stromversorgung an der Unterseite eines Rotorblattes in der Nähe der Blattspitze montiert ist und aus der vorhandenen Windenergie elektrische Energie für den ROSAR-Transponder liefert. Dies kann nun auf mechanische, elektrische oder magnetohydrodynamische Weise realisiert werden.

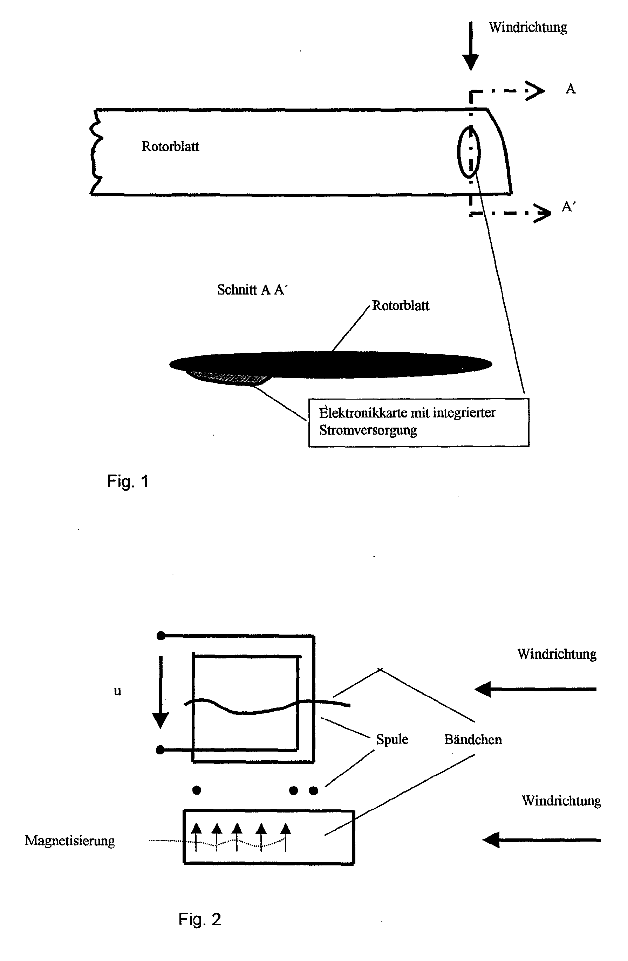

Bei einer mechanischen Konzeption der Stromversorgung muss die äußere Form sehr flach und stromlinienförmig ausgestaltet sein, damit die Umströmung der Blattspitze nicht beeinträchtigt wird. Bei Berücksichtigung von aerodynamisch bedingter Flugleistungsminderung und ausreichendem elektrischen Bauraumes sollte eine Höhe von 10 Millimetern nicht überschritten werden (Fig. 1). Eine solche Stromversorgungseinrichtung kann als Teil einer Nachrüstkonzeption für ROSAR auf das Hubschrauber-Rotorblatt geklebt oder auch schon im Fertigungsprozess in das Rotorblatt integriert werden, beispielsweise durch Einlamellierung.

Bei einer elektrischen Ausgestaltung der vorgeschlagenen Stromversorgung werden parallel zur Windrichtung miniaturisierte turboelektrische Generatoren angeordnet, oder es wird das Flattern von Bändern im Wind genutzt, wobei die Stromversorgungskarte in viele kleine Windkanälchen unterteilt wird, die ebenfalls parallel zur Windrichtung angeordnet sind. Die Wandlung der mechanisch erzeugten Flatterenergie in elektrische Energie wird piezoelektrisch oder elektrodynamisch durchgeführt.

Beispielsweise sind die Bändchen mit einem piezoelektrischen Stoff beschichtet und am Anfang und Ende dieser Bändchen befinden sich die Elektroden (Fig. 2).

Ein anderes elektrodynamisches Ausführungsbeispiel sieht vor, dass auf die besagten Bändchen magnetische Schichten aufgebracht werden und eine Flachspule mit einer oder mehreren Windungen sich quer dazu befindet, in die bei Bewegung der magnetischen Schichten der Bändchen eine Wechselspannung induziert wird. Mehrere dieser Elemente werden in Reihe oder parallel geschaltet und alle Elemente dieser Ausführungsformen (Spulen, Kanäle und Bändchen) in mikrosystemtechnischer Fertigungsweise hergestellt.

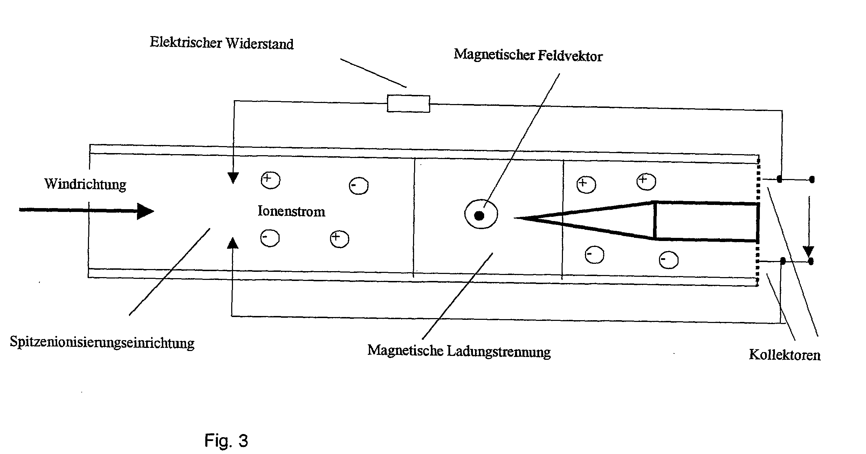

Wie oben bereits angesprochen, ist zur Lösung der gestellten Aufgabe auch eine magnetohydrodynamische Konzeption möglich. Wie in Fig. 3 skizziert, befindet sich in einem flachen vom Wind durchströmten Kanal eine lonisierungseinrichtung, beispielsweise eine Spitzenionisationseinrichtung, die kontinuierlich betrieben (Gleichstrom) wird oder periodisch ein- und ausgeschaltet wird, so dass quer dazu ein intermittierender Ionen-Strom entsteht, der durch den Wind angetrieben wird. Unmittelbar hinter der lonenstromerzeugungs-Einrichtung befindet sich eine magnetische Einrichtung, die den intermittierenden Strom in zwei getrennte Kanäle (1, 2) lenkt, was beispielsweise durch ein Magnetfeld eines Dauermagneten senkrecht zur lonenstrom-Einrichtung bewirkt wird. Am Ende der beiden Kanäle befinden sich Kollektoren, die als feinmaschige Netze oder auch als metallbeschichtete Kanaloberfläche ausgebildet sind. Zwischen diesen Kollektoren besteht eine Wechselspannung, die einen Strom über einen angeschlossenen Verbraucher treibt. Mehrere Elemente werden seriell, parallel oder gemischt geschaltet. Auch diese Ausführungsformen sind mikrosystemtechnisch hergestellt.

## Patentansprüche

1. Stromversorgung für Sende- und Empfangsantennen eines ROSAR-Systems, die in der Spitze eines Hubschrauber-Rotorblattes integriert sind und in Echtzeitnähe im Online-Betrieb pulsfrequent oder im FM-CW-Betrieb sowie im cm- bzw. mm-Wellenlängenbereich arbeiten, **dadurch gekennzeichnet, dass** sowohl durch Mini-Turbinengeneratorsätze, die in einem oder mehreren flachen Kanälen, welche durch eine Transponderkarte führen, integriert sind, als auch durch flatternde Bändchen in diesen Kanälen eine piezoelektrische bzw. elektrodynamische Umwandlung der Windenergie in elektrische Energie durchgeführt wird.

2. Stromversorgung für Sende- und Empfangsantennen eines ROSAR-Systems, die in der Spitze eines Hubschrauber-Rotorblattes integriert sind und in Echtzeit im Online-Betrieb pulsfrequent oder im FM-CW-Betrieb sowie im cm- bzw. mm-Wellenlängenbereich arbeiten, **dadurch gekennzeichnet, dass** in einem oder mehreren flachen Kanälen einer Transponderkarte eine elektrische lonisationseinrichtung ein von der Windenergie getriebener lonenstrom erzeugt und mit einem Kollektor aufgefangen wird, wobei Kollektor und lonisierungseinrichtung die Klemmen eines elektrischen Generators bilden zur Umwandlung aerodynamischer in elektrische Energie.

3. Stromversorgung für Sende- und Empfangsantennen nach Anspruch 1, **dadurch gekennzeichnet, dass** sie von in parallel zur Windrichtung angeordneten miniaturisierten turbo-elektrischen Generatoren gebildet wird.

4. Stromversorgung nach einem der Ansprüche 1 bis 3, **dadurch gekennzeichnet, dass** sie als Transponderkarte in ihrer äußeren Form sehr flach und stromlinienförmig konzipiert ist und in ihrer Höhe einen 10 mm-Bereich nicht überschreitet.

5. Stromversorgung nach einem der Ansprüche 1 bis 4, **dadurch gekennzeichnet, dass** die Transponderkarte in zahlreiche Wind-Kanälchen geringer Dimensionierung unterteilt ist, die parallel zur Windrichtung verlaufen, in denen zur Erzeugung einer Flatterenergie entsprechend große Bändchen angeordnet sind, die eine piezoelektrische Schicht aufweisen und an ihrem Anfang und Ende mit Elektroden versehen sind.

6. Stromversorgung nach einem der Ansprüche 1 bis 5, **dadurch gekennzeichnet, dass** die Bändchen mit magnetischen Schichten versehen sind und quer dazu eine Flachspule mit einer oder mehreren Windungen angeordnet ist.

7. Stromversorgung nach Anspruch 6, **dadurch gekennzeichnet, dass** die Bändchen miteinander in Reihe oder parallel geschaltet sind.

8. Stromversorgung nach Anspruch 2, **dadurch gekennzeichnet, dass** sie als flacher vom Wind durchströmter Kanal ausgebildet und mit einer lonisationseinrichtung - vorzugsweise einer Spitzenionisationseinrichtung - versehen ist, die kontinuierlich betrieben (Gleichstrom) oder periodisch (Wechselstrom) ein- und ausgeschaltet wird.

9. Stromversorgung nach Anspruch 2 und 8, **dadurch gekennzeichnet, dass** unmittelbar hinter der lonisationseinrichtung eine magnetische Einrichtung zur Trennung des intermittierenden Stromes in zwei getrennte Kanäle angeordnet ist, denen Kollektoren zugeordnet sind.
